# EUROPÄISCHE PATENTSCHRIFT

(11) **EP 0 643 207 B1**
(45) Veröffentlichungstag und Bekanntmachung des Hinweises auf die Patenterteilung: **17.06.1998**
(21) Anmeldenummer: 94112874.6
(22) Anmeldetag: 18.08.1994
(51) Int. Cl.: F02C 3/02, F02C 6/00, F02C 3/34

(54) **Gasturbine mit Druckwellenbrenner, Zwischen-Überhitzung und Gasrückführung**
Gasturbine with pressure wave combustor, reheating and gas recirculation
Turbine à gaz avec chambre de combustion à ondes de pression, réchauffage et recirculation de gaz

(30) Priorität: 13.09.1993 DE 4331081
(43) Veröffentlichungstag der Anmeldung: 15.03.1995
(73) Patentinhaber: ASEA BROWN BOVERI AG, 5400 Baden (CH)
(72) Erfinder: Althaus, Rolf, Dr., D-9230 Flawil (CH)

(56) Entgegenhaltungen:
- EP-A- 0 468 083
- EP-A- 0 474 893
- EP-A- 0 474 894
- EP-A- 0 549 930
- EP-A- 0 582 809
- EP-A- 0 592 817
- CH-A- 250 742
- GB-A- 2 229 733
- US-A- 2 461 186
- ABB REVIEW, Nr.1, 1994, BADEN (CH) Seiten 20 - 25 H.U.FRUTSCHI 'Advance Cycle System with new GT24 etc...'
- ETZ ELEKZTROTECHNISCHE ZEITSCHRIFT, Bd.22, Nr.114, 1993, BERLIN Seiten 1402 - 1403 'Gasturbinen mit hohem wirkungsgrad'

## Beschreibung

### Technisches Gebiet

Die Erfindung betrifft ein Verfahren zum Betrieb einer Gasturbinenanlage, bei dem die in einem Verdichter aufbereitete Luft stromab der Verdichtung mit einem Brennstoff gemischt und einer mit isochorer oder isobarer Verbrennung arbeitenden Druckwellenmaschine zugeführt und verbrannt wird und anschliessend mit dem so erhaltenen Arbeitsgas eine Hochdruck- und eine Niederdruck-Gasturbine beaufschlagt werden.

### Stand der Technik

Derartige Verfahren zur Aufbereitung des Arbeitsgases in Gasturbinenanlagen sind bekannt.

So wird z.B. in EP-A-468 083 ein Verfahren beschrieben, bei dem die Verbrennung des Brennstoff/Luft-Gemisches in den Rotorzellen einer Druckwellenmaschine bei konstantem Volumen erfolgt und ein Teil des durch die Verbrennung in den Rotorzellen sich bildenden Arbeitsgases eine Hochdruck-Gasturbine beaufschlagt und der restliche Teil aus den Rotorzellen eine Niederdruck-Gasturbine beaufschlagt. In der Druckwellenmaschine wird im Betrieb eine homogene Brennstoffverteilung in Längsrichtung der Zellen erzeugt. Daraus ergeben sich Probleme, wenn an diese Druckwellenmaschine sowohl eine Niederdruck- als auch eine Hochdruck-Turbine angeschlossen werden, denn man ist bestrebt, zur Wirkungsgradverbesserung beide Turbinen bei derselben optimalen Temperatur zu betreiben, obwohl die Gase der Hochdruck-Turbine und der Niederdruck-Turbine bei unterschiedlichen Drücken zugeführt werden.

Der Anmelderin ist ein Verfahren zum Betrieb einer Gasturbinenanlage mit einer mit isochorer Verbrennung arbeitenden Druckwellenmaschine bekannt, bei der die verdichtete Luft schichtweise unterschiedlich mit Brennstoff angereichert wird, so dass z.B. eine Schicht mit einem fetten und eine Schicht mit einem mageren Brennstoff/Luft-Gemisch entsteht. Die Schichten werden nach der Verbrennung auf dieselbe Temperatur entspannt und die stärker mit Brennstoff angereicherte Teilmenge wird der Hochdruck-Turbine und die schwächer mit Brennstoff angereicherte Teilmenge der Niederdruck-Turbine zugeführt. Dadurch wird gegenüber dem in EP-A-468 083 offenbarten Verfahren der Wirkungsgrad der Anlage erhöht.

Ausserdem ist eine Gasturbinenanlage bekannt, bei der der Heissgasstrom aus der an der Druckwellenmaschine angeschlossenen Niederdruck-Treibgasleitung mit dem Heissgasstrom, der aus der Hochdruckturbine austritt, also mit teilentspanntem und abgekühltem Gas aus der Hochdruck-Turbine, in der Niederdruck-Turbine bzw. zum Teil vor dem Eintritt in die Niederdruck-Turbine gemischt wird. Durch Mischen der Heissgasströme unterschiedlicher Temperatur wird die Eintrittstemperatur des Gases in die Niederdruck-Turbine herabgesetzt, was sich ungünstig auf den Wirkungsgrad auswirkt.

Eine Verbesserung ist mit der in EP-A-592 817 A1 beschriebenen Gasturbogruppe möglich, die im wesentlichen aus Verdichter, Hochdruck-Mitteldruck-Turbine, Niederdruck-Turbine und Druckwellenmaschine besteht, und bei der zwischen Hochdruck-Mitteldruck-Turbine und Niederdruck-Turbine eine weitere Brennkammer mit einem Brenner vorgesehen ist. Die aus der Druckwellenmaschine austretenden Heissgasströme gelangen über eine Doppelspirale in die Hochdruck-Mitteldruck-Turbine, wo sie miteinander vermischt werden. Anschliessend wird der Heissgasstrom in der Brennkammer erwärmt, bevor er in die Niederdruck-Turbine gelangt und dort entspannt wird.

### Darstellung der Erfindung

Die Erfindung versucht, die Nachteile des Standes der Technik zu vermeiden. Ihr liegt die Aufgabe zugrunde, ein Verfahren zum Betrieb einer Gasturbinenanlage gemäss Oberbegriff des Anspruches 1 zu schaffen, das sich durch miminale NOₓ-Emissionen, sehr gutes Teillastverhalten und einen hohen Wirkungsgrad auszeichnet.

Erfindungsgemäss wird dies bei einem Verfahren zum Betrieb einer Gasturbinenanlage, bei dem die in einem Verdichter aufbereitete Luft stromab der Verdichtung mit einem Brennstoff gemischt und einer mit isochorer oder isobarer Verbrennung arbeitenden Druckwellenmaschine zugeführt wird und dort das Gemisch verbrannt wird und anschliessend mit dem so erhaltenen Arbeitsgas eine Hochdruck- und eine Niederdruck-Gasturbine beaufschlagt werden, wobei dem von der Druckwellenmaschine zur Niederdruck-Turbine geleiteten Teilmengenstrom vor dem Eintritt in die Niederdruck-Turbine teilentspanntes und abgekühltes Gas aus der Hochdruck-Turbine zugemischt wird, und im Anschluss an diese Zumischung Brennstoff eingedüst wird und danach das Gemisch in einer Brennkammer verbrannt wird, dadurch erreicht, ein Teil des Gemisches aus teilentspanntem und abgekühltem Abgas der Hochdruck-Turbine und aus dem aus der Druckwellenmaschine zur Niederdruck-Turbine geleiteten Teilmengenstrom vor der Eindüsung von Brennstoff zur Zwischenüberhitzung abgezweigt wird, mit einem Teil der im Verdichter komprimierten Luft gemischt wird und über eine Abgas-Leitung und eine Drosselklappe in die Niederdruck-Leitung, kurz vor dem Eintritt in die Druckwellenmaschine, zurückgeführt wird.

Die Vorteile der Erfindung liegen unter anderem in der hohen Leistungsdichte, dem sehr hohen Wirkungsgrad, dem sehr guten Teillastverhalten und den sehr niedrigen NOₓ-Emissionswerten. Auf Grund der Abgasrückführung treten vorteilhafterweise nur minimale Energieverluste auf.

### Kurze Beschreibung der Zeichnung

In der Zeichnung ist ein Ausführungsbeispiel der Erfindung dargestellt.

Es zeigen:
- Fig. 1: ein Verfahrensschema zum Betrieb einer Gasturbinenanlage mit einer mit isochorer Verbrennung arbeitenden Druckwellenmaschine mit Abgasrückführung;
- Fig. 2: ein Zeit-Temperatur-Diagramm für das Arbeitsgas.

Es sind nur die für das Verständnis der Erfindung wesentlichen Elemente gezeigt. Die Strömungsrichtung der Arbeitsmittel ist mit Pfeilen bezeichnet.

### Weg zur Ausführung der Erfindung

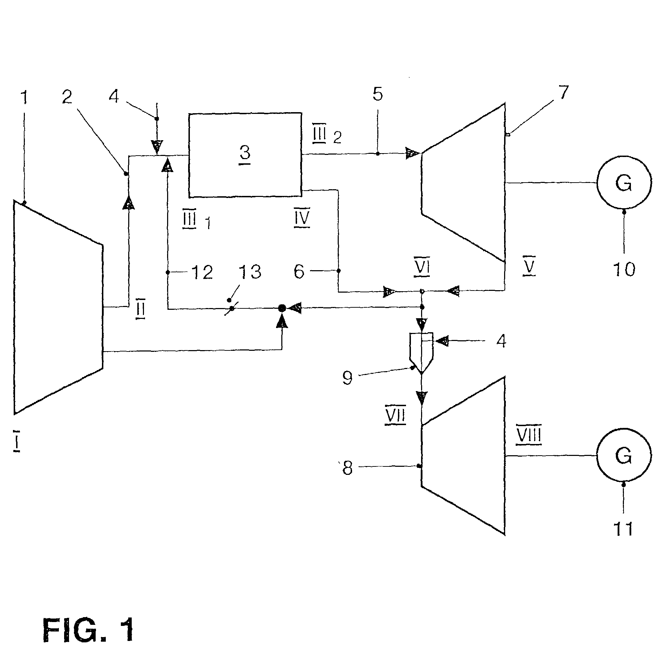

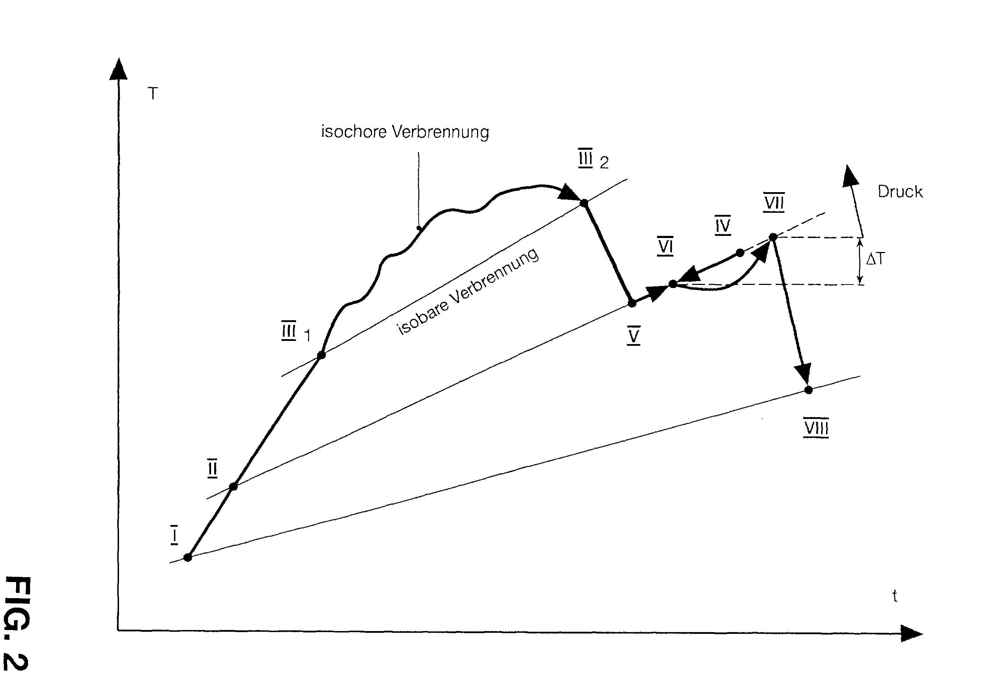

Nachfolgend wird die Erfindung anhand eines Ausführungsbeispieles und der Figuren 1 und 2 näher erläutert.

Bei der in Fig. 1 schematisch dargestellten Gasturbinenanlage liefert ein Niederdruck-Verdichter 1 über eine Niederdruck-Leitung 2 vorverdichtete Luft in eine Druckwellenmaschine 3. Der Begriff Niederdruck ist hier nicht absolut zu verstehen, sondern er ist nur niedrig im Vergleich zum übrigen Druckniveau der Gasturbinenanlage. Vor der Druckwellenmaschine 3 wird der vorverdichteten Luft ein Brennstoff 4, beispielsweise Erdgas, zugemischt. Damit die Anlage auch unter Teillastbedingungen arbeiten kann, sind die Düsen zur Brennstoffzuschaltung stufenweise zuschaltbar. Das ist auch im Hinblick auf niedrige NOₓ-Emissionswerte wichtig.

Das Brennstoff/Luft-Gemisch gelangt in die Druckwellenmaschine 3 und wird dort in bekannter Weise, wie z.B. in EP 0 468 083 beschrieben, unter isochoren Bedingungen verbrannt. Die so aufbereiteten Gase werden dann über eine Hochdruck-Treibgasleitung 5 bzw. eine Niederdruck-Treibgasleitung 6 geleitet und beaufschlagen die Hochdruck-Turbine 7 bzw. die Niederdruck-Turbine 8, welche die Generatoren 10, 11 antreiben.

Selbstverständlich kann die verdichtete Luft auch schichtweise unterschiedlich stark mit Brennstoff angereichert werden, so dass eine Schicht mit einem fetten und eine Schicht mit einem mageren Brennstoff/Luft-Gemisch entsteht. Die Schichten werden nach der Verbrennung auf dieselbe Temperatur entspannt und die stärker mit Brennstoff angereicherte Teilmenge wird der Hochdruck-Turbine 7 und die schwächer mit Brennstoff angereicherte Teilmenge der Niederdruck-Turbine 8 zugeführt.

Nach dem Hochdruckteil wird dem teilentspannten und entsprechend abgekühlten Gas das unter Umständen heissere Gas aus der Niederdruck-Treibgasleitung 6 zugemischt. Nach der Mischung des teilentspannten und entsprechend abgekühlten Abgases aus der Hochdruck-Turbine 7 mit dem unter Umständen heisseren Gas aus der Niederdruck-Treibgasleitung 6 wird ein Teil dieses Abgases abgezweigt, mit einem Teil der im Verdichter 1 komprimierten Luft gemischt und über eine Abgas-Leitung 12 und eine Drosselklappe 13 in die Niederdruck-Leitung 2, kurz vor dem Eintritt in die Druckwellenmaschine, zurückgeführt. Dadurch wird die Löschgrenze des Brenners erhöht, der Wirkungsgrad der Anlage steigt, und die aus umwelttechnischen Aspekten möglichst geringen NOₓ-Emissionen werden stark reduziert. Die Mischung des relativ heissen Abgases mit einem Teil der vom Verdichter 1 kommenden kalten Luft hat den Vorteil, dass die Abgas-Leitung 12 beim Durchströmen der Gase nicht zu sehr thermisch beansprucht wird. Der Hauptvorteil des Verfahrens besteht darin, dass nur minimale Energieverluste auftreten.

In Fig. 2 ist der zeitliche Temperaturverlauf des Gases abgebildet, wobei die römischen Ziffern den Zeitpunkten bzw. Orten entsprechen, die im Verfahrensschema nach Fig. 1 ebenfalls mit römischen Ziffern gekennzeichnet sind.

Aus dem in Fig. 2 dargestellten Zeit-Temperatur-Diagramm geht hervor, dass durch die Zwischenüberhitzung ein Temperaturgewinn von ΔT vor Eintritt des Gases in die Niederdruck-Turbine 8 erzielt wird. Dadurch wird die Turbine geschont, was sich vorteilhaft auf den Gesamtprozess auswirkt. Im Gesamtverfahren sind ausserdem mehr Regelmöglichkeiten vorhanden, so dass ein sehr gutes Teillastverhalten der Anlage erreicht wird.

Selbstverständlich kann das erfindungsgemässe Verfahren auch für Gasturbinenanlagen angewendet werden, bei denen Druckwellenmaschinen 3 eingesetzt werden, welche mit isobarer Verbrennung des Gases arbeiten und über Hochdruck-Turbinen 7 bzw. Niederdruck-Turbinen 8 die Generatoren 10 bzw. 11 antreiben.

### Bezugszeichenliste

- 1: Niederdruck-Verdichter
- 2: Niederdruck-Leitung
- 3: Druckwellenmaschine
- 4: Brennstoff
- 5: Hochdruck-Treibgasleitung
- 6: Niederdruck-Treibgasleitung
- 7: Hochdruck-Turbine
- 8: Niederdruck-Turbine
- 9: Brennkammer
- 10: Generator
- 11: Generator
- 12: Abgas-Leitung
- 13: Drosselklappe

## Patentansprüche

1. Verfahren zum Betrieb einer Gasturbinenanlage, bei dem die in einem Niederdruck-Verdichter (1) aufbereitete Luft über eine Niederdruck-Leitung (2) einer mit isochorer oder isobarer Verbrennung arbeitenden Druckwellenmaschine (3) zugeführt wird, wobei die Luft stromab der Verdichtung mit einem Brennstoff (4) gemischt und das Gemisch in der Druckwellenmaschine (3) verbrannt wird und anschliessend mit dem so erhaltenen Arbeitsgas über eine Hochdruck-Treibgasleitung (5) eine Hochdruck-Turbine (7) und über eine Niederdruck-Treibgasleitung (6) eine Niederdruck-Turbine (8) beaufschlagt werden, wobei dem von der Druckwellenmaschine (3) zur Niederdruck-Turbine (8) geleiteten Teilmengenstrom vor dem Eintritt in die Niederdruck-Turbine (8) teilentspanntes und abgekühltes Gas aus der Hochdruck-Turbine (7) zugemischt und nach der Zumischung Brennstoff (4) eingedüst wird, und das Gemisch in einer Brennkammer (9) verbrannt wird, dadurch gekennzeichnet, dass ein Teil des Gemisches aus teilentspanntem und abgekühltem Abgas der Hochdruck-Turbine (7) und aus dem aus der Druckwellenmaschine zur Niederdruck-Turbine (8) geleiteten Teilmengenstrom vor der Eindüsung von Brennstoff (4) zur Zwischenüberhitzung abgezweigt wird, mit einem Teil der im Verdichter komprimierten Luft gemischt wird und über eine Abgas-Leitung (12) und eine Drosselklappe (13) in die Niederdruck-Leitung (2), kurz vor dem Eintritt in die Druckwellenmaschine (3), zurückgeführt wird.

## Claims

1. Method of operating a gas turbine installation in which the air prepared in a low-pressure compressor (1) is supplied via a low-pressure conduit (2) to a pressure-wave machine (3) operating with constant-volume or constant-pressure combustion, the air being mixed with a fuel (4) downstream of the compression and the mixture being burnt in the pressure-wave machine (3), and the working gas obtained in this manner is subsequently admitted via a high-pressure driving-gas conduit (5) to a high-pressure turbine (7) and via a low-pressure driving-gas conduit (6) to a low-pressure turbine (8), there being an admixture of partially expanded and cooled gas from the high-pressure turbine (7) into the partial quantity flow led from the pressure-wave machine (3) to the low-pressure turbine (8) before entry into the low-pressure turbine (8), and fuel (4) being introduced after the admixture process and the mixture being burnt in a combustion chamber (9), characterized in that a part of the mixture of partially expanded and cooled exhaust gas from the high-pressure turbine (7) and of the partial quantity flow led from the pressure-wave machine to the low-pressure turbine (8) is branched off before the introduction of fuel (4) for reheating, is mixed with a part of the air compressed in the compressor and is returned via an exhaust gas conduit (12) and a throttle butterfly (13) into the low-pressure conduit (2) shortly before entry into the pressure-wave machine (3).

## Revendications

1. Procédé pour la conduite d'une installation de turbines à gaz, dans lequel l'air préparé dans un compresseur à basse pression (1) est fourni, par une conduite à basse pression (2), à une machine à ondes de pression (3) opérant avec une combustion isochore ou isobare, l'air étant mélangé avec un combustible (4) en aval de la compression et le mélange étant brûlé dans la machine à ondes de pression (3) et ensuite une turbine à gaz à haute pression (7) et une turbine à gaz à basse pression (8) étant alimentées avec le gaz de travail ainsi obtenu, par une conduite de gaz combustible à haute pression (5) et par une conduite de gaz combustible à basse pression (6), un gaz partiellement détendu et refroidi sortant de la turbine à haute pression (7) étant mélangé au courant partiel conduit de la machine à ondes de pression (3) vers la turbine à basse pression (8), avant son entrée dans la turbine à basse pression (8), et un combustible (4) étant injecté après ce mélange et le mélange étant brûlé dans une chambre de combustion (9), caractérisé en ce qu'une partie du mélange composé des gaz d'échappement partiellement détendus et refroidis de la turbine à haute pression (7) et du courant partiel conduit de la machine à ondes de pression vers la turbine à basse pression (8) est déviée vers une resurchauffe avant l'injection de combustible (4), est mélangée avec une partie de l'air comprimé dans le compresseur et est recyclée, par une conduite de gaz d'échappement (12) et un clapet d'étranglement (13), dans la conduite à basse pression (2), peu avant l'entrée dans la machine à ondes de pression (3).
